# EUROPEAN PATENT SPECIFICATION

(11) **EP 4 304 516 B1**
(45) Date of publication and mention of the grant of the patent: **19.08.2026**
(21) Application number: 22714790.7
(22) Date of filing: 14.03.2022
(51) Int. Cl.: A61C 3/00

(54) **APPLICATOR AND METHOD OF FORMING AN APPLICATOR**
APPLIKATOR UND VERFAHREN ZUR HERSTELLUNG EINES APPLIKATORS
APPLICATEUR ET PROCÉDÉ DE FORMATION D'UN APPLICATEUR

(30) Priority: 16.03.2021 EP 21162850
(43) Date of publication of application: 17.01.2024
(73) Proprietor: medmix Switzerland AG, 9469 Haag (Rheintal) (CH)
(72) Inventor: MOSER, Josef, 5726 Unterkulm (CH)
(74) Representative: Manitz Finsterwald Patent- und Rechtsanwaltspartnerschaft mbB
(86) International application number: PCT/EP2022/056483
(87) International publication number: WO 2022/194752

(56) References cited:
- EP-A1- 0 800 361
- EP-B1- 0 800 361
- US-A- 6 049 934
- US-B2- 9 402 701
- US-B2- 9 402 701

## Description

The present invention relates to an applicator, in particular to a dental applicator, the applicator comprising an applicator head with an applicator and an elongate body part, wherein the applicator is made from two parts of different material and comprises two kinks, with one of the two kinks being arranged at a part of the applicator where the two different parts at least partially overlap one another. The invention further relates to a method of forming an applicator.

Applicators are well known, particularly in the dental and medical field for treating e.g. a patient's gums, his teeth, spaces between the teeth or the like. The applicators can be used to apply fluids, such as cremes, medicinal fluids, ointments and the like to parts of a patient's mouth or body.

Such known applicators are for example shown in US 9 402 701 B2 and EP 0 800 361 A.

For carrying out the various tasks, the applicators generally have an application tip that is configured to carry out the precise application. For example, brushes are known for cleaning between a patient's teeth, also foams are also known for applying a dental or medical fluid at an area of the mouth. Particularly with regard to hard to reach areas of the mouth it is desirable to provide an applicator that can be deformed for the specific application and that reliably maintains its shape after deformation.

Moreover, the application tips need to be secured to the handle of the applicator such that neither the application tip nor parts thereof fall off in use of the applicator.

For this reason it is an object of the present invention to make available an applicator that is simple to use, that maintains its shape and form in use and that does not loose parts thereof in use.

This object is satisfied by the subject matter of claim 1.

According to the invention, such an applicator, in particular a dental applicator, comprises an applicator head with an application tip and an elongate body part, wherein the applicator is made from two parts of different material and comprises two kinks, with one of the two kinks being arranged at a part of the applicator where the two different parts at least partially overlap one another.

By forming the applicator of two parts, in particular only two parts, avoids parts of the applicator from becoming detached during use so that an applicator is made available that does not lose any particles in use.

Moreover, by forming the applicator of two parts of different material, each part can be tailored to its specific use.

For example, the provision of an elongate body part as a handle enables a good tactile control of the application tip during the use of the applicator specifically if this is made of a harder, less flexible material and hence a more robust material than the applicator head.

Moreover, the provision of an applicator head with an application tip that is e.g. integrally formed in one piece with the application tip reduces the number of different components of an applicator and hence reduces the risk of losing parts of the applicator on use thereof.

Such an applicator head formed of a second material can for example be formed of a material that is softer and/or more flexible than a material of the elongate body part and hence be used more effectively for the specific application.

The provision of two kinks enables the production of an applicator that can easily be deformed for the specific use of the applicator so as to reach hard to reach areas in the mouth of a patient.

By forming one of the two kinks in a region of the applicator where the two parts thereof overlap one another provides the applicator with an increased stability at this part of the applicator resulting in an applicator that can be deformed in a shape stable manner, with this change in shape also being maintained during the use of the applicator for improved application results.

One of the two parts made from a different material may be the elongate body part and the other of the two parts made from a different material may be the applicator head, preferably with the applicator head comprising the application tip that is integrally formed thereat. An applicator having such a design is more stable in use and avoids the problems of the prior art associated with losing parts thereof.

Some of the applicator head may overlap some of the elongate body part. In this way an applicator can be formed, e.g. in an injection molding process or an additive manufacturing process with the two parts being non-releasably attached to one another during normal use of the applicator.

According to the invention a cross-section of the elongate body part along at least a majority of a length of the elongate body part is further formed at least substantially by a Reuleaux triangle. Forming the applicator in this way ensures that this does not role on a surface on which it is placed causing the application tip from being contaminated in use necessitating the use of a further applicator increasing the time and cost of a treatment.

In this connection a majority means more than half of a length of the elongate body part, specifically more than 70% and preferably more than 85% of a length of the elongate body part.

The application tip may comprise one of a brush with bristles and a foam. Such application tips can be reliably used for different medical and dental applications.

The application tip may be configured to store a liquid thereat. In this way a dental fluid can be introduced into the mouth of a patient for treatment of a target site, or unwanted fluid can be removed from a patient following a successful treatment of the patient. By way of example the application tip can be configured to store between 6 and 15 mg of dental fluid, preferably between 8 and 12 mg of dental fluid.

According to the invention one of the two kinks is further arranged directly adjacent to that part of the elongate body part that is formed at least substantially by the Reuleaux triangle.

In this way one of the kinks can be formed at a part made of material that is stable in shape and form even after it has been deformed.

The application tip may be a brush with bristles, with the brush and bristles being formed by at least one of a thermoplastic elastomer (TPE), a thermoplastic polyurethane (TPU), a thermoplastic vulcanizate (TPV), and a thermoplastic olefin elastomer (TPO). In this way a simple to use applicator can be made available. By way of example such materials can be Santoprene 8281, further examples of TPE materials that come from block copolymers group are amongst others CAWITON, THERMOLAST K, THERMOLAST M, Arnitel, Hytrel, Dryflex, Mediprene, Kraton, Pibiflex, Sofprene, and Laprene. Out of these styrenic block copolymers (TPE-s) are CAWITON, THERMOLAST K, THERMOLAST M, Sofprene, Dryflex and Laprene. Laripur, Desmopan or Elastollan are examples of thermoplastic polyurethanes (TPU). Sarlink, Santoprene, Termoton, Solprene, THERMOLAST V, Vegaprene or Forprene are examples of TPV materials. Examples of thermoplastic olefin elastomers (TPO) compound are For-Tec E, Engage and Ninjaflex.

The two kinks may be configured to be bent in one direction, in particular in only direction, especially such that the application tip may face upwardly relative to the elongate body part. This means that the applicator may be bent in one direction at each kink so that a hook shaped applicator or the like is formed in use providing sufficient degrees of freedom of use of the applicator.

At least one of the two kinks may be configured as a peripherally extending groove, for example, the groove has a round, circular, oval, triangular cross-section transverse to a longitudinal axis of the applicator. The provision of an applicator with such grooves enables the applicator to be bent by 360° relative to the longitudinal axis so that the user thereof can manipulate the position of the application tip for his specific desired use.

The applicator head may be made from a material different from the elongate body part. For example, the applicator head may be made from a material that is softer and/or more flexible than a material of the elongate body part. This means that the applicator head can be tailored to the specific use of the applicator.

The elongate body part may be made from one of polypropylene and polylactide. Such plastics are stable in shape and size also after they have experienced a certain deformation.

The applicator head may comprise a material selected from the group of members consisting of a thermoplastic elastomer (TPE), a thermoplastic polyurethane (TPU), a thermoplastic vulcanizate (TPV), a thermoplastic olefin elastomer (TPO), polyethylene (PE), polypropylene (PP), poly vinyl chloride (PVC), polyurethane (PU), polystyrene (PS) and combinations of the foregoing. Such thermoplastic elastomers are flexible and soft in use for, e.g. dental applications and also permit the storage of fluid thereat.

The applicator head may be configured to receive a part of the elongate body part. This means that parts of the elongate body part may extend into and possibly through some of the applicator head for improved attachment of the applicator head at the elongate body part.

The part of the elongate body part received within the applicator head may comprise one or more centering elements, for example, two groups of centering elements are provided that are axially spaced apart from one another. The centering elements enable the precise positioning of the applicator head at the elongate body part and may also provide a security against rotation in order to prevent a rotation of the applicator head relative to the elongate body part.

One of the kinks may be arranged at that part of the applicator head and that part of the elongate body part that is received within the applicator head. In this way the second kink is also provided in that part of the applicator that has the harder and more rigid material properties than the applicator head.

The application tip may be a foam application tip made from an open cell foam having pores. Such an application tip can be used to distribute dental or medical fluids in an expedient manner.

The applicator may further comprise an undulating surface or the like. Such an undulating surface may act as a grip for holding the applicator. In this connection it should be noted that other forms of grip may likewise be provided that have enable an improved gripping of the applicator in use.

The undulating surface may be provided to cover between 5 and 30 %, preferably between 10 and 25% of the outer surface of the elongate body part. In this way a length of the grip can be selected such that it approximately amounts to a length corresponding to between 1 to 3 widths of fingers of a user of the applicator.

The undulating surface may comprise a plurality of peaks and valleys. Such undulating surfaces are simple to manufacture e.g. in an injection molding process.

The applicator may comprise one or more first points of injection. These can beneficially be formed at that part of a mold used to form the elongate body part.

The one or more first points of injection may be provided at the elongate body part. In this way a material of the elongate body part can be injected into a corresponding mold at that part of the mold designed for the elongate body part in such a way that a material of the elongate body part does not have to flow through non-desirable regions of the mold.

One of the one or more first points of injection may be provided at the undulating surface. Since the structure of such an undulating surface may be more filigree than that of the elongate body part it may be necessary to provide a point of injection at a position that corresponds to that part of the mold where the undulating surface is formed, such that the material can flow more easily into the part of the mold shaped for molding the undulating surface, i.e. the grip.

One or more second points of injection may be provided. These can preferably be designed for injecting a second kind of material into the mold of the applicator.

By way of example, the one or more second points of injection may be provided at the applicator head. In this way the second points of injection can beneficially be arranged at a position where the injection mold injects the material for the applicator head.

Beneficially the one or more second points of injection may be provided at the kink arranged at the applicator head. In this way the material of the applicator head can flow more easily around the kink and possibly also in the region of at least one of the first and second types of centering element.

According to a further aspect the present invention relates to a method of forming an applicator, in particular a dental applicator, the applicator comprising an applicator head with an application tip and an elongate body part, wherein the applicator is made from two parts of different material and comprises two kinks, with one of the two kinks being arranged at a part of the applicator where the two different parts at least partially overlap one another, the method comprising the steps of injection molding the elongate body part and then injection molding the applicator head with parts of the applicator head being overmolded onto parts of the elongate body part.

In this way the applicator can be manufactured in a fast, facile and cost effective manner.

Further embodiments of the invention are described in the following description of the figures and/or the dependent claims attached to this specification. The invention will be explained in the following in detail by means of embodiments and with reference to the drawing in which is shown:
- Figs. 1a & b: side views of an applicator and an elongate body part thereof;
- Fig. 2: view of an applicator head of the applicator of Fig. 1a;
- Figs. 3a & b: a side view and a perspective view of a connecting portion of the elongate body part of Fig. 1b;
- Figs. 4a &B: a front view of the applicator of Fig. 1a and a view of the circumference of the elongate body part of Fig. 1b;
- Fig. 5: a view of a further applicator head;
- Fig. 6: a view of a further applicator head;
- Fig. 7: a view of a further applicator head; and
- Figs. 8a to 8c: a further type of applicator.

In the following the same reference numerals will be used for parts having the same or equivalent function. Any statements made having regard to the direction of a component are made relative to the position shown in the drawing and can naturally vary in the actual position of application.

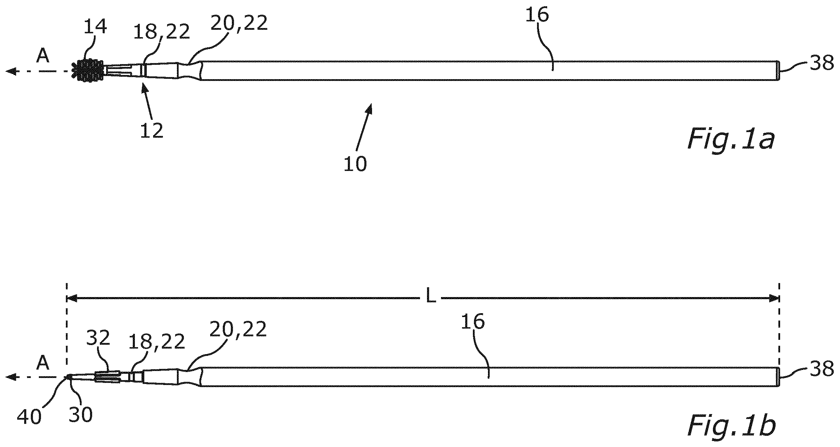

Fig. 1a shows an applicator 10. The applicator 10 comprises an applicator head 12 with an application tip 14 and an elongate body part 16. The applicator 10 is made from two parts 16, 12 of different material. One of the two parts made from a different material is the elongate body part 16 and the other of the two parts 16, 12 made from a different material is the applicator head 12.

The applicator further comprises first and second kinks 18, 20, with one of the two kinks 18 being arranged at a part of the applicator 10 where the two different parts 12, 16 at least partially overlap one another.

The application tip 14 comprises a brush 24 with a plurality of bristles 26. The bristles 26 are dimensioned for the specific application. The brush 24 and the bristles 26 are formed by a thermoplastic elastomer (TPE). The application tip 14 is configured to store between 5 and 15 mg of a liquid (not shown) thereat.

In this connection it should be noted that a hardness of the application head 12 and of the application tip 14 may be selected in the hardness range 20 Shore OO up to 90 Shore A.

The bristles 26 may have a diameter selected in the range of 0.1 to 1 mm and/or a length selected in the range of 0.2 to 4 mm.

The bristles 26 may be of cylindrical shape or have the shape of a truncated cone, with the diameter then being the diameter at half of the length of the bristle 26.

The number of bristles may be selected in the range of 20 to 100, preferably in the range of 30 to 50.

Fig. 1b shows a side view of the elongate body part 16. A cross-section of the elongate body part 16 is formed by a Reuleaux triangle between the second kink 20 and a rear end 38. The elongate body part 16 may have this shape over 60 to 85% of a length L thereof, preferably over 75 to 80 % of its length.

The applicator head 12 is made from a material different from the elongate body part 16. The elongate body part 16 may be made from one of polypropylene PP and polylactide PLA.

In this connection it should be noted that a hardness of the elongate body part 16 may be selected in the hardness range Shore D hardness between 45 and 96, preferably between 70 and 90 shore D hardness.

A front end 40 of the elongate body part 16 comprises first and second types of centering elements 30, 32 that are used on molding the applicator head 12 over and onto some of the elongate body part 16 to center the applicator head 12 at the elongate body part 16 and to provide a security against rotation at the elongate body part 16 in order to prevent a rotation of the applicator head 12 relative to the elongate body part 16 in use thereof.

The applicator head is molded over some of the elongate body part 16 with a layer thickness selected in the range of 0.05 to 3 mm, preferably within the range of 0.1 to 2 mm.

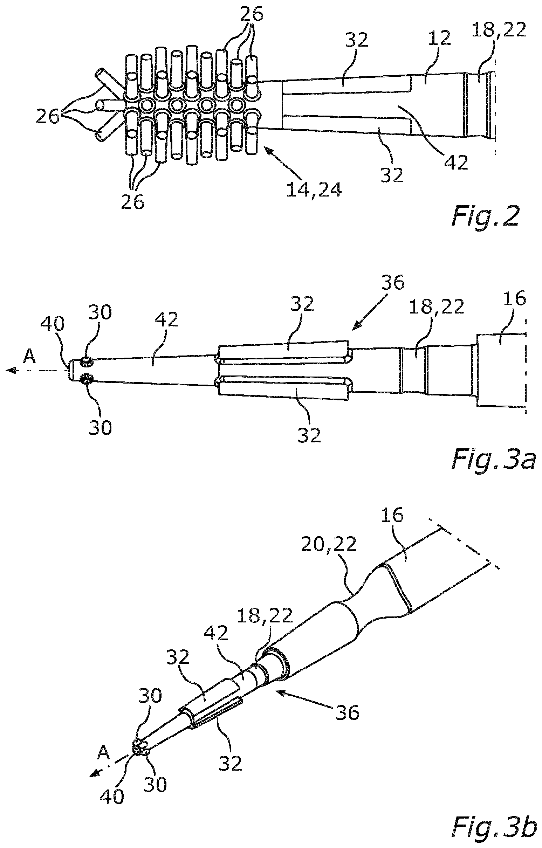

Fig. 2 shows an enlarged view of the brush 24 of the applicator 10 of Fig. 1. The second type of centering elements 32 are visible as these not only extend into the applicator head 12, but also through the applicator head 12.

In contrast to this the first type of centering elements 30 only extend into the applicator head 12 but not through the applicator head 12.

A height of the first and second types of centering elements 30, 32 in a direction transverse to the longitudinal axis A, may be selected in the range of 0.05 to 3 mm, preferably in the range of 0.1 to 2 mm.

In this connection it should be noted that a length of the first type of centering elements 30 transverse to the longitudinal axis A may be selected in the range of 0.1 to 10 mm, preferably in the range of 0.3 to 5 mm.

In this connection it should be noted that a width of the first type of centering elements 30 in parallel to the longitudinal axis A may be selected in the range of 0.01 to 5 mm, preferably in the range of 0.05 to 1 mm.

In this connection it should be noted that a length of the second type of centering elements 32 along the longitudinal axis A may be selected in the range of 0.1 to 5 cm, preferably in the range of 0.3 to 2 cm.

In this connection it should be noted that a width of the second type of centering elements 32 along the longitudinal axis A may be selected in the range of 0.1 to 10 mm, preferably in the range of 0.5 to 5 mm.

The second type of centering elements 32 are arranged between the application tip 14 and the first kink 18.

Both the first and second types of centering elements 30, 32 are formed as rectangular structures that engage the applicator head and prevent a movement thereof relative to the elongate body part 16.

On forming the applicator head 12 over the elongate body part 16 one forms a continuous outer surface 44 of the applicator 10, with an outer part of the second type of centering elements 32 forming a part of the continuous outer surface 44.

The applicator head 12 tapers in diameter between the second kink 20 and the application tip 14.

Fig. 3a shows a side view of the elongate body part 16 and Fig. 3b shows a perspective view of a connecting portion 36 of the elongate body part 16. The applicator head 12 is injection molded over the elongate body part 16 over the length of the connecting portion. A length of the connecting portion 36 is selected as 10 to 30 % of a length L of the elongate body part 16 between the front end 40 and the rear end 38.

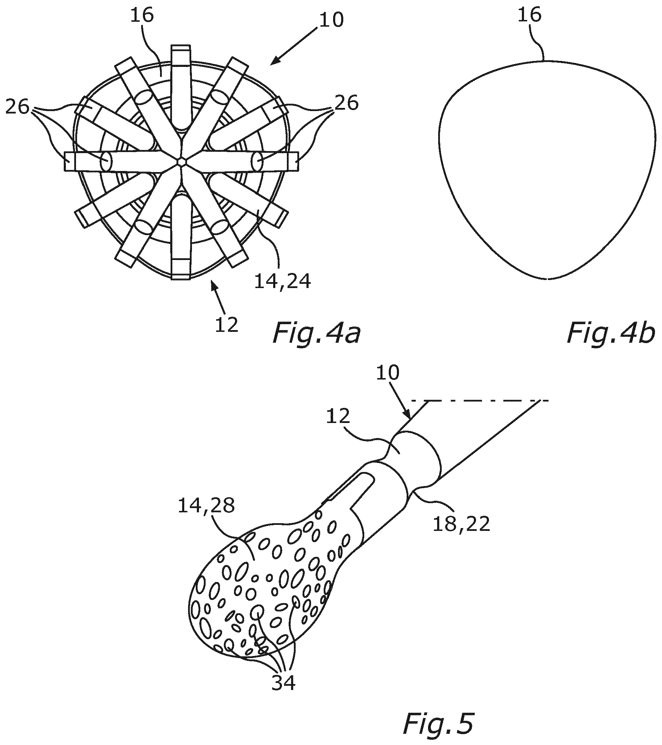

Figs. 4a and 4b show enlarged views of the triangular shape of the applicator 10, with Fig. 4a showing the application tip 14 attached and Fig. 4b showing the application tip 14 removed from the elongate body part 16.

The first kink 18 is arranged at the connecting portion 36, i.e. at that part of the applicator 10 where the applicator head 12 is overmolded onto the elongate body part 16, whereas the second kink 20 is arranged only at the elongate body part 16.

Both the first and second types of centering elements 30, 32 project from an outer surface 42 of the connecting portion 36.

The first type of centering elements 30 are arranged transverse to the second type of centering elements 32 and also transverse to a longitudinal axis A of the applicator 10 that extends in parallel to the main direction of extent of the applicator 10. By arranging the first and second types of centering elements 30, 32 transverse to one another a security against rotation can be improved.

The second type of centering elements 32 are arranged in parallel with the longitudinal axis A of the applicator 10.

The two types of centering elements 30, 32 are arranged axially spaced apart from one another, with the second type of centering elements 32 being arranged between the first type of centering elements 30 and the second kink 22.

In this connection it should be noted that a spacing between the first and second types of centering elements 30, 32 along the longitudinal axis A may be selected in the range of 0.1 to 5 cm, preferably in the range of 0.5 to 3 cm.

In the shown examples two first types of centering elements 30 and two second types of centering elements 32 are provided in respective groups, with each centering element 30, 32 of a respective group being arranged at opposite sides of the elongate body part 16.

In this connection it should be noted that between 1 and 4 of such first and second types of centering elements 30, 32 can respectively be provided, i.e. one of each our of each or one first and four second types of centering elements 30, 32.

The second kink 20 is arranged directly adjacent to that part of the elongate body part 16 that is formed at least substantially by the Reuleaux triangle.

The two kinks 18, 20 are configured to be bent in one direction while being able to be bent at any angle in the radial direction by 360° relative to the longitudinal axis. The triangular shaped body permits the applicator 10 to lie on a flat surface without rolling off and the applicator 10 can be placed onto the flat surface with the application tip 14 facing away from the flat surface, i.e. relative to the elongate body part 16.

The first and second kinks 18, 20 are each configured as a peripherally extending groove 22. The groove 22 can have one of a round, circular, oval, and triangular cross-section transverse to a longitudinal axis A of the applicator 10.

A width of the groove 22 of second kink 20 is larger than a width of the groove 22 of the first kink 20 in a direction transverse to the longitudinal axis A.

In this connection it should be noted that a width of the groove 22 of the second kink 20 can be selected in the range of 1 % to 5 % of a length L of the applicator 10.

In this connection it should further be noted that the second kink 20 is arranged at a length corresponding to 10 to 30 % of a length L of the applicator 10.

In this connection it should be further noted that a width of the groove 22 of the first kink 18 is selected in the range of 0.2 to 1 % of a length of the applicator 10.

In this connection it should further be noted that the first kink 18 is arranged at a length corresponding to 2 to 10 % of a length L of the applicator 10.

Fig. 5 shows a view of a further applicator 10, with a foam application tip 14 made from an open cell foam having pores 34. The material of the application tip 14 made of foam may be one of polyethylene (PE), polypropylene (PP), poly vinyl chloride (PVC), polyurethane (PU), polystyrene (PS) and combinations of the foregoing.

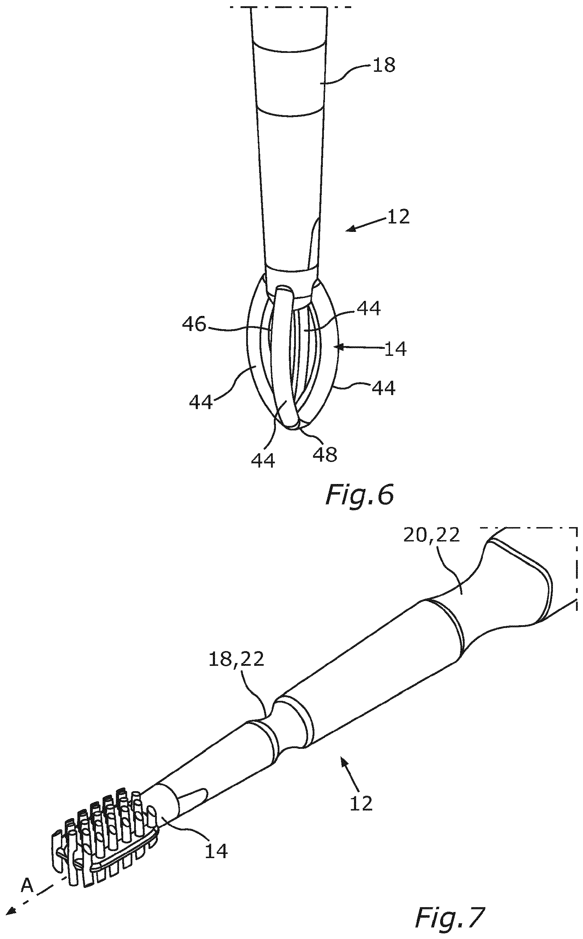

Fig. 6 shows a view of yet a further applicator head 12. The application tip 14 has four claws 44 that form a cage 46 in which a fluid may be collected on use of the applicator 10 of Fig. 6.

The claws 44 are connected at each end to one another and are curved in shape and merge into a tip 48 at a most distal point of the applicator 10.

Fig. 7 shows a view of yet a further applicator head 12. The application tip 14 is a brush 24 with bristles 26. In contrast to the brush 24 with bristles 26 shown in connection with Figs. 1 to 4, the bristles 26 extend in parallel to one another and only in two directions that are oppositely disposed with respect to the longitudinal axis A rather than radially with respect to the longitudinal axis A.

A method of forming the applicator 10 may comprise the steps of injection molding the elongate body part 16 and then injection molding the applicator head 12 over and onto parts of the elongate body part 16.

On using the applicator 10 a user can decide where the applicator 10 is intended to be used and then bend the application tip 14 relative to the elongate body part 16 at least once at one of the first and second kinks 18, 20 prior to using the application tip 14 even at hard to reach target cites.

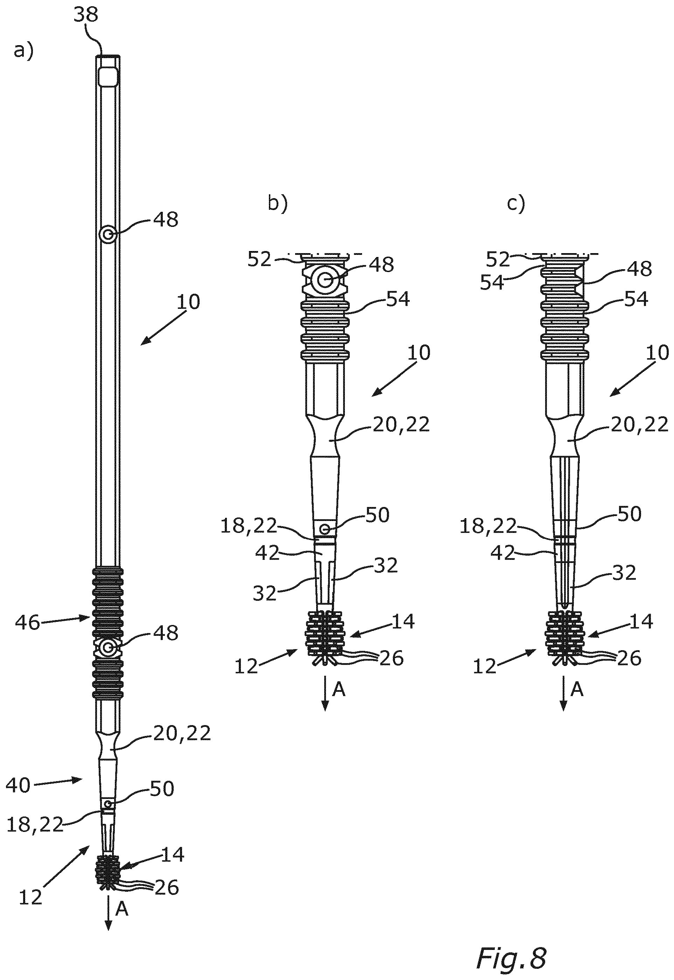

Figs. 8a to 8c show a further type of the applicator 10. This applicator 10 comprises an undulating surface 46. Such an undulating surface 46 can be beneficially used by a user of the applicator 10 to grip the applicator 10 in an improved manner.

The undulating surface 46 is provided to cover approximately 20% of the outer surface of the elongate body part 16. In this connection it should be noted that it could be arranged to cover between 5 and 30 %, preferably between 10 and 25%, of the outer surface of the elongate body part 16.

The undulating surface 46 comprises a plurality of peaks 52 and valleys 54. In the example shown 13 peaks 52 and 12 valleys are provided. In this connection it should be noted that a respective number of peaks 52 and valleys 54 selected in the range of 5 to 40 can be provided. It is generally desirable if the number of peaks 52 provided is one more than the number of valley 54, i.e. if six peaks are provided then 5 valleys 54 may be provided and if 40 peaks 52 are provided then 39 valleys 54 may be provided.

As can also be seen from Fig. 8a two first points of injection 48 and one second point of injection 50 are provided. The first points of injection 48 are provided at the elongate body part 16 and the second point of injection 50 are provided at the applicator head 12.

As can be seen from the enlarged view of Fig. 8b one of the first points of injection 48 is provided at the undulating surface 46 and the second point of injection 50 is provided at the kink 18 arranged at the applicator head 12.

In this connection it should be noted that the term point of injection refers to a formation at which the material of the respective component is injected into a mold for forming the applicator 10, with the formation remaining visible at the outer surface of the applicator 10 in the region of where the respective material was injected into the mold for the formation of the corresponding part of the applicator 10.

Fig. 8c shows a side view of the applicator of Fig. 8b indicating the position of the formations remaining after formation of the respective part, i.e. their points of injection 48, 50.

The respective point of injection 48, 50 is provided in the vicinity of a filigree component to be formed as the material will flow best out of an injection nozzle (not shown) at this point as it has the highest temperature and pressure at the injection nozzle meaning that it will flow best into these filigree components from the injection nozzle.

It should also be noted that the grip shown in the manner of an undulating surface 46 in Figs. 8a to 8c can also be formed at the other kinds of applicators 10 shown in the foregoing. Similarly the other kinds of applicators may also have the first and second points of injection that are respectively present at regions of the applicator 10 where the material can be beneficially injectied into a mold for forming the respective part at increased efficiency and with improved results.

### List of reference numerals:

- 10: applicator
- 12: applicator head
- 14: application tip
- 16: elongate body part
- 18: first kink
- 20: second kink
- 22: groove
- 24: brush
- 26: bristles
- 28: foam
- 30: first type of centering element
- 32: second type of centering element
- 34: pores
- 36: connecting portion
- 38: rear end of 16
- 40: front end of 16
- 42: outer surface of 36
- 44: claws
- 46: undulating surface
- 48: first points of injection
- 50: second point of injection
- 52: peak
- 54: valley

- A: longitudinal axis
- L: length of 16

## Claims

1. An applicator (10), in particular a dental applicator, the applicator (10) comprising an applicator head (12) with an application tip (14) and an elongate body part (16), wherein the applicator (10) is made from two parts (16, 12) of different material and comprises two kinks (18, 20), with one of the two kinks (18) being arranged at a part of the applicator (10) where the two different parts (12, 16) at least partially overlap one another, **characterised in that** a cross-section of the elongate body part (16) along at least a majority of a length (L) of the elongate body part (16) is at least substantially formed by a Reuleaux triangle, and wherein one of the two kinks (18, 20) is arranged directly adjacent to that part of the elongate body part (16) that is formed at least substantially by the Reuleaux triangle.

2. The applicator (10) according to claim 1, wherein one of the two parts made from a different material is the elongate body part (16) and the other of the two parts (16, 12) made from a different material is the applicator head (12), in particular wherein some of the applicator head (12) overlaps some of the elongate body part (16).

3. The applicator (10) according to one of the preceding claims 1 or 2,
wherein the application tip (14) comprises one of a brush (24) with bristles (26) and a foam (28); and/or
wherein the application tip (14) is configured to store a liquid thereat.

4. The applicator (10) according to one of the preceding claims 1 to 2, wherein the application tip (14) is a brush (24) with bristles (26), with the brush (24) and bristles (26) being formed by at least one of a thermoplastic elastomer (TPE), a thermoplastic polyurethane (TPU), a thermoplastic vulcanizate (TPV), and a thermoplastic olefin elastomer (TPO).

5. The applicator (10) according to one of the preceding claims 1 to 4, wherein the two kinks (18, 20) are configured to be bent in one direction, in particular in only direction, especially such that the application tip (14) faces upwardly relative to the elongate body part (16); and/or wherein at least one of the two kinks (18, 20) is configured as a peripherally extending groove (22), in particular wherein the groove (22) has a round, circular, oval, triangular cross-section transverse to a longitudinal axis (A) of the applicator (10).

6. The applicator (10) according to one of the preceding claims 1 to 5,
wherein the applicator head (12) is made from a material different from the elongate body part (16); and/or
wherein the elongate body part (16) is made from one of polypropylene (PP) and polylactide (PLA), and/or
wherein the applicator head (12) comprises a material selected the group of members consisting of a thermoplastic elastomer (TPE), a thermoplastic polyurethane (TPU), a thermoplastic vulcanizate (TPV), a thermoplastic olefin elastomer (TPO), polyethylene (PE), polypropylene (PP), poly vinyl chloride (PVC), polyurethane (PU), polystyrene (PS) and combinations of the foregoing.

7. The applicator (10) according to one of the preceding claims 1 to 6,
wherein the applicator head (12) is configured to receive a part of the elongate body part (16), in particular wherein the part of the elongate body part (16) received within the applicator head (12) comprises one or more centering elements (30, 32) in particular wherein two groups of centering elements (30, 32) are provided that are axially spaced apart from one another; and/or
wherein one of the kinks (18) is arranged at that part of the applicator head (12) and that part of the elongate body part (16) that is received within the applicator head (12); and/or
wherein the elongate body part comprises features (30, 32) providing a security against rotation for the applicator head (12) with respect to the elongate body part (16).

8. The applicator (10) according to one of the preceding claims 1 to 3 and claim 7, wherein the application tip (14) is a foam application tip (14) made from an open cell foam having pores (34).

9. The applicator (10) according to one of the preceding claims, further comprising an undulating surface (46).

10. The applicator (10) according to claim 9, wherein the undulating surface (46) is provided to cover between 5 and 30 %, preferably between 10 and 25%, of the outer surface of the elongate body part (16); and/or wherein the undulating surface comprises a plurality of peaks (52) and valleys (54).

11. The applicator (10) according to one of the preceding claims, wherein one or more first points of injection (48) are provided.

12. The applicator (10) according to claim 11, wherein the one or more first points of injection are provided at the elongate body part (16)

13. The applicator (10) according to claim 9 or claim 10 and claim 11 or claim 12, wherein one of the one or more first points of injection (48) is provided at the undulating surface (46).

14. The applicator (10) according to one of the preceding claims, wherein one or more second points of injection (50) are provided, in particular wherein the one or more second points of injection (50) are provided at the applicator head (12); and/or wherein the one or more second points of injection are provided at the kink (18) arranged at the applicator head (12).

15. A method of forming an applicator (10), in particular a dental applicator, the applicator (10) comprising an applicator head (12) with an application tip (14) and an elongate body part (16), wherein the applicator (10) is made from two parts of different material and comprises two kinks (18, 20), with one of the two kinks (18, 20) being arranged at a part of the applicator (10) where the two different parts at least partially overlap one another, wherein a cross-section of the elongate body part (16) along at least a majority of a length (L) of the elongate body part (16) is at least substantially formed by a Reuleaux triangle, and wherein one of the two kinks (18, 20) is arranged directly adjacent to that part of the elongate body part (16) that is formed at least substantially by the Reuleaux triangle, the method comprising the steps of injection molding the elongate body part (16) and then injection molding the applicator head (12) with parts of the applicator head (12) being overmolded onto parts of the elongate body part (16).

## Patentansprüche

1. Applikator (10), insbesondere ein zahnmedizinischer Applikator, wobei der Applikator (10) einen Applikatorkopf (12) mit einer Applikationsspitze (14) und einen länglichen Körperteil (16) umfasst, wobei der Applikator (10) aus zwei Teilen (16, 12) aus unterschiedlichem Material besteht und zwei Knicke (18, 20) aufweist, wobei einer der beiden Knicke (18) an einem Teil des Applikators (10) angeordnet ist, an dem sich die beiden unterschiedlichen Teile (12, 16) sich zumindest teilweise überlappen, **dadurch gekennzeichnet, dass** ein Querschnitt des länglichen Körperteils (16) entlang zumindest eines Großteils einer Länge (L) des länglichen Körperteils (16) zumindest im Wesentlichen durch ein Reuleaux-Dreieck gebildet wird, und wobei einer der beiden Knicke (18, 20) unmittelbar benachbart zu dem Abschnitt des länglichen Körperteils (16) angeordnet ist, der zumindest im Wesentlichen durch das Reuleaux-Dreieck gebildet wird.

2. Applikator (10) nach Anspruch 1, wobei einer der beiden Teile, die aus einem verschiedenen Material hergestellt sind, der längliche Körperteil (16) ist und der andere der beiden Teile (16, 12), die aus einem verschiedenen Material hergestellt sind, der Applikatorkopf (12) ist, wobei insbesondere ein Teil des Applikatorkopfes (12) einen Teil des länglichen Körperteils (16) überlappt.

3. Applikator (10) nach einem der vorhergehenden Ansprüche 1 oder 2, wobei die Applikationsspitze (14) entweder eine Bürste (24) mit Borsten (26) oder einen Schaumstoff (28) umfasst; und/oder wobei die Applikationsspitze (14) so ausgebildet ist, dass sie eine Flüssigkeit daran aufnehmen kann.

4. Applikator (10) nach einem der vorhergehenden Ansprüche 1 bis 2, wobei die Applikationsspitze (14) eine Bürste (24) mit Borsten (26) ist, wobei die Bürste (24) und die Borsten (26) aus mindestens einem von einem thermoplastischen Elastomer (TPE), einem thermoplastischen Polyurethan (TPU), einem thermoplastischen Vulkanisat (TPV) und einem thermoplastischen Olefin-Elastomer (TPO) besteht.

5. Applikator (10) nach einem der vorhergehenden Ansprüche 1 bis 4, wobei die beiden Knicke (18, 20) so ausgebildet sind, dass sie in eine Richtung, insbesondere in nur eine Richtung, gebogen sind, insbesondere so dass die Applikationsspitze (14) relativ zum länglichen Körperteil (16) nach oben weist; und/oder wobei mindestens einer der beiden Knicke (18, 20) als sich umlaufend erstreckende Nut (22) ausgebildet ist, wobei insbesondere die Nut (22) quer zu einer Längsachse (A) des Applikators (10) einen runden, kreisförmigen, ovalen oder dreieckigen Querschnitt aufweist.

6. Applikator (10) nach einem der vorhergehenden Ansprüche 1 bis 5, wobei der Applikatorkopf (12) aus einem verschiedenen Material als der längliche Körperteil (16) besteht; und/oder wobei der längliche Körperteil (16) aus Polypropylen (PP) oder Polylactid (PLA) besteht, und/oder
wobei der Applikatorkopf (12) ein Material umfasst, das aus der Gruppe von Mitgliedern ausgewählt ist, die aus einem thermoplastischen Elastomer (TPE), einem thermoplastischen Polyurethan (TPU), einem thermoplastischen Vulkanisat (TPV), einem thermoplastischen Olefin-Elastomer (TPO), Polyethylen (PE), Polypropylen (PP), Polyvinylchlorid (PVC), Polyurethan (PU), Polystyrol (PS) und Kombinationen der vorgenannten Materialien bestehen.

7. Applikator (10) nach einem der vorhergehenden Ansprüche 1 bis 6, wobei der Applikatorkopf (12) so ausgebildet ist, dass er einen Teil des länglichen Körperteils (16) aufnimmt, wobei insbesondere der innerhalb des Applikatorkopfes (12) aufgenommene Teil des länglichen Körperteils (16) ein oder mehrere Zentrierelemente (30, 32) umfasst, wobei insbesondere zwei Gruppen von Zentrierelementen (30, 32) vorgesehen sind, die axial voneinander beabstandet sind; und/oder
wobei einer der Knicke (18) an dem Teil des Applikatorkopfes (12) und dem Teil des länglichen Körperteils (16) angeordnet ist, der in den Applikatorkopf (12) aufgenommen ist; und/oder
wobei der längliche Körperteil Merkmale (30, 32) aufweist, die eine Verdrehsicherung für den Applikatorkopf (12) gegenüber dem länglichen Körperteil (16) bilden.

8. Applikator (10) nach einem der vorhergehenden Ansprüche 1 bis 3 und Anspruch 7, wobei die Applikationsspitze (14) eine SchaumApplikationsspitze (14) ist, die aus einem offenzelligen Schaumstoff mit Poren (34) hergestellt ist.

9. Applikator (10) nach einem der vorhergehenden Ansprüche, der ferner eine wellenförmige Oberfläche (46) umfasst.

10. Applikator (10) nach Anspruch 9, wobei die wellenförmige Oberfläche (46) so ausgebildet ist, dass sie zwischen 5 und 30 %, vorzugsweise zwischen 10 und 25 %, der Außenfläche des länglichen Körperteils (16) bedeckt; und/oder wobei die wellenförmige Oberfläche eine Vielzahl von Erhebungen (52) und Vertiefungen (54) umfasst.

11. Applikator (10) nach einem der vorhergehenden Ansprüche, wobei eine oder mehrere erste Injektionsstellen (48) vorgesehen sind.

12. Applikator (10) nach Anspruch 11, wobei die eine oder mehreren ersten Injektionsstellen am länglichen Körperteil (16) vorgesehen sind

13. Applikator (10) nach Anspruch 9 oder Anspruch 10 und Anspruch 11 oder Anspruch 12, wobei einer der einen oder mehreren ersten Injektionsstellen (48) an der wellenförmigen Oberfläche (46) vorgesehen ist.

14. Applikator (10) nach einem der vorhergehenden Ansprüche, wobei eine oder mehrere zweite Injektionsstellen (50) vorgesehen sind, wobei insbesondere die eine oder mehreren zweiten Injektionsstellen (50) am Applikatorkopf (12) vorgesehen sind; und/oder wobei die eine oder mehreren zweiten Injektionsstellen an dem am Applikatorkopf (12) angeordneten Knick (18) vorgesehen sind.

15. Verfahren zur Herstellung eines Applikators (10), insbesondere eines zahnmedizinischen Applikators, wobei der Applikator (10) einen Applikatorkopf (12) mit einer Applikationsspitze (14) und einen länglichen Körperteil (16) umfasst, wobei der Applikator (10) aus zwei Teilen aus unterschiedlichem Material hergestellt ist und zwei Knicke (18, 20) umfasst, wobei einer der beiden Knicke (18, 20) an einem Teil des Applikators (10) angeordnet ist, an dem sich die beiden unterschiedlichen Teile zumindest teilweise überlappen, wobei ein Querschnitt des länglichen Körperteils (16) entlang zumindest eines Großteils einer Länge (L) des länglichen Körperteils (16) zumindest im Wesentlichen durch ein Reuleaux-Dreieck gebildet wird, und wobei einer der beiden Knicke (18, 20) direkt benachbart zu dem Teil des länglichen Körperteils (16) angeordnet ist, der zumindest im Wesentlichen durch das Reuleaux-Dreieck gebildet ist, wobei das Verfahren die Schritte zum Spritzgießen des länglichen Körperteils (16) und anschließend zum Spritzgießen des Applikatorkopfes (12) umfasst, wobei Teile des Applikatorkopfes (12) auf Teile des länglichen Körperteils (16) aufgespritzt werden.

## Revendications

1. Applicateur (10), en particulier applicateur dentaire, l'applicateur (10) comprenant une tête d'applicateur (12) avec une pointe d'application (14) et une partie de corps allongée (16), dans lequel l'applicateur (10) est constitué de deux parties (16, 12) en des matériaux différents et comporte deux coudes (18, 20), l'un des deux coudes (18) étant disposé au niveau d'une partie de l'applicateur (10) où les deux parties différentes (12, 16) se chevauchent au moins partiellement,
**caractérisé en ce qu'**une section transversale de la partie de corps allongée (16) sur au moins la majeure partie d'une longueur (L) de ladite partie de corps allongée (16) est au moins sensiblement formée par un triangle de Reuleaux, et
dans lequel l'un des deux coudes (18, 20) est disposé directement de manière adjacente à la partie de la partie de corps allongée (16) qui est formée au moins sensiblement par le triangle de Reuleaux.

2. Applicateur (10) selon la revendication 1, dans lequel l'une des deux parties constituées d'un matériau différent est la partie de corps allongée (16) et l'autre des deux parties (16, 12) constituées d'un matériau différent est la tête d'applicateur (12), en particulier dans lequel une partie de la tête d'applicateur (12) recouvre une partie de la partie de corps allongée (16).

3. Applicateur (10) selon l'une des revendications précédentes 1 ou 2,
dans lequel la pointe d'application (14) comprend soit une brosse (24) dotée de poils (26), soit une mousse (28) ; et/ou
dans lequel la pointe d'application (14) est configurée pour stocker un liquide au niveau de celle-ci.

4. Applicateur (10) selon l'une des revendications précédentes 1 à 2, dans lequel la pointe d'application (14) est une brosse (24) munie de poils (26), la brosse (24) et les poils (26) étant constitués de l'un au moins des matériaux suivants : un élastomère thermoplastique (TPE), un polyuréthane thermoplastique (TPU), un vulcanisat thermoplastique (TPV) et un élastomère oléfinique thermoplastique (TPO).

5. Applicateur (10) selon l'une des revendications 1 à 4 précédentes,
dans lequel les deux coudes (18, 20) sont configurés pour être courbés dans une direction, en particulier dans une seule direction, notamment de telle sorte que la pointe d'application (14) est orientée vers le haut par rapport à la partie de corps allongée (16) ; et/ou
dans lequel l'un au moins des deux coudes (18, 20) est configuré comme une rainure (22) s'étendant sur la périphérie, en particulier dans lequel la rainure (22) présente une section transversale ronde, circulaire, ovale ou triangulaire, s'étendant transversalement par rapport à un axe longitudinal (A) de l'applicateur (10).

6. Applicateur (10) selon l'une des revendications 1 à 5 précédentes,
dans lequel la tête d'applicateur (12) est réalisée dans un matériau différent de celui de la partie de corps allongée (16) ; et/ou dans lequel la partie de corps allongée (16) est réalisée en polypropylène (PP) ou en polylactide (PLA), et/ou
dans lequel la tête d'applicateur (12) comprend un matériau choisi parmi le groupe constitué d'un élastomère thermoplastique (TPE), d'un polyuréthane thermoplastique (TPU), d'un vulcanisat thermoplastique (TPV), d'un élastomère oléfinique thermoplastique (TPO), polyéthylène (PE), polypropylène (PP), polychlorure de vinyle (PVC), polyuréthane (PU), polystyrène (PS) et des combinaisons de ces derniers.

7. Applicateur (10) selon l'une des revendications 1 à 6 précédentes,
dans lequel la tête d'applicateur (12) est configurée pour recevoir une partie de la partie de corps allongée (16), en particulier dans lequel la partie de corps allongée (16) reçue à l'intérieur de la tête d'applicateur (12) comprend un ou plusieurs éléments de centrage (30, 32), en particulier dans lequel deux groupes d'éléments de centrage (30, 32) sont prévus, espacés axialement l'un de l'autre ; et/ou
dans lequel l'un des coudes (18) est disposé au niveau de la partie de la tête d'applicateur (12) et de la partie de la partie de corps allongée (16) qui est reçue à l'intérieur de la tête d'applicateur (12) ; et/ou dans lequel la partie de corps allongée comprend des éléments (30, 32) assurant un blocage en rotation de la tête d'applicateur (12) par rapport à la partie de corps allongée (16).

8. Applicateur (10) selon l'une des revendications 1 à 3 et 7 précédentes,dans lequel la pointe d'application (14) est une pointe d'application en mousse (14) constituée d'une mousse à cellules ouvertes comportant des pores (34).

9. Applicateur (10) selon l'une des revendications précédentes, comprenant en outre une surface ondulée (46).

10. Applicateur (10) selon la revendication 9, dans lequel la surface ondulée (46) est prévue pour recouvrir entre 5 et 30 %, de préférence entre 10 et 25 %, de la surface extérieure de la partie de corps allongée (16) ; et/ou dans lequel la surface ondulée comprend une pluralité de crêtes (52) et de creux (54).

11. Applicateur (10) selon l'une des revendications précédentes, dans lequel un ou plusieurs premiers points d'injection (48) sont prévus.

12. Applicateur (10) selon la revendication 11, dans lequel lesdits ou plusieurs premiers points d'injection sont prévus au niveau de la partie de corps allongée (16).

13. Applicateur (10) selon la revendication 9 ou la revendication 10 et la revendication 11 ou la revendication 12, dans lequel l'un desdits un ou plusieurs premiers points d'injection (48) est prévu au niveau de la surface ondulée (46).

14. Applicateur (10) selon l'une des revendications précédentes, dans lequel un ou plusieurs seconds points d'injection (50) sont prévus, en particulier dans lequel lesdits un ou plusieurs seconds points d'injection (50) sont prévus au niveau de la tête d'applicateur (12) ; et/ou dans lequel lesdits un ou plusieurs seconds points d'injection sont prévus au niveau du coude (18) disposé au niveau de la tête d'applicateur (12).

15. Procédé de formation d'un applicateur (10), en particulier d'un applicateur dentaire, l'applicateur (10) comprenant une tête d'applicateur (12) avec une pointe d'application (14) et une partie de corps allongée (16), dans lequel l'applicateur (10) est constitué de deux parties en matériaux différents et comprend deux coudes (18, 20), l'un des deux coudes (18, 20) étant disposé au niveau d'une partie de l'applicateur (10) où les deux parties différentes se chevauchent au moins partiellement l'une l'autre, dans lequel une section transversale de la partie de corps allongée (16) sur au moins la majeure partie d'une longueur (L) de la partie de corps allongée (16) est au moins sensiblement formée par un triangle de Reuleaux, et dans lequel l'un des deux coudes (18, 20) est disposé directement de manière adjacente à la partie de la partie de corps allongée (16) qui est formée au moins sensiblement par le triangle de Reuleaux, le procédé comprenant les étapes consistant à mouler par injection la partie de corps allongée (16), puis à mouler par injection la tête d'applicateur (12), des parties de la tête d'applicateur (12) étant surmoulées sur des parties de la partie de corps allongée (16).
